# EUROPEAN PATENT SPECIFICATION

(11) **EP 0 462 570 B1**
(45) Date of publication and mention of the grant of the patent: **19.11.1997**
(21) Application number: 91109982.8
(22) Date of filing: 18.06.1991
(51) Int. Cl.: G11B 5/708

(54) **Magnetic recording medium**
Magnetischer Aufzeichnungsträger
Milieu d'enregistrement magnétique

(30) Priority: 19.06.1990 JP 160534/90
(43) Date of publication of application: 27.12.1991
(73) Proprietor: MATSUSHITA ELECTRIC INDUSTRIAL CO., LTD., Kadoma-shi, Osaka-fu, 571 (JP)
(72) Inventor: Shimasaki, Yukihiro, Sanda City, 669-13 (JP); Sakamoto, Kazunori, Katano City 567 (JP); Kisoda, Akira, Moriguchi City, 70 (JP); Midou, Yuji, Higashiosaka City, 577 (JP)
(74) Representative: Jung, Elisabeth, Dr.

(56) References cited:
- EP-A- 0 066 039
- DE-A- 3 408 000

## Description

### FIELD OF THE INVENTION AND RELATED ART STATEMENT

### 1. FIELD OF THE INVENTION

The present invention relates to a coated type magnetic recording medium (e.g. a magnetic tape and a flexible disk) for the use in an audio apparatus, a video apparatus, a computer and the like.

### 2. DESCRIPTION OF THE RELATED ART

In recent years, a video apparatus for realizing a high quality picture, a long-time recording and a small size of the recording medium, and an audio apparatus for utilizing a digital signal have been developed. One of the most important devices for these apparatus is a magnetic recording medium having high recording density. Regarding said magnetic recording medium having high recording density, in order to reduce the spacing loss during recording in the short wave length region, the surface roughness of the respective magnetic film is made very small. However as a consequence of the smooth surface of the magnetic film, the coefficient of friction of the same becomes large, and hence the runability is deteriorated, thereby causing undesirable jitter. In order to improve the smoothness of the magnetic layer surface and to lower the coefficient of friction of the same, various lubricants in a group such as the group consisting of higher fatty acids, higher fatty acid esters or fluorines have been used.

In recent years, a video tape recorder combined with a camera in an integral body and a portable apparatus have been developed, and the environmental conditions for these apparatus becomes more severe. For instance, they are required to work under a wide range of environmental temperatures. Thus stable runability of the magnetic tape is necessary, even under such severe environmental conditions.

It is a difficult problem to obtain both a smooth surface and a low coefficient of friction of tile magnetic film as mentioned-above. The desired low coefficient of friction is realized by the above-mentioned addition of a lubricant to the magnetic film. However, in the case, when an excessive amount of the lubricant is added, the adhesive properties of the magnetic film to the non-magnetic substrate (base film) become poor, and further, the dynamic strength of the magnetic film is decreased. As a consequence of the decreased dynamic strength of the magnetic film, the magnetic film is worn due to contact with the magnetic head and other mechanical parts, so that a fine powder consisting of the magnetic film material is produced, thereby causing some problems. For instance the powder sticks to the magnetic head, whereby the durability is deteriorated and the dropout is increased, since the lubricant rises to the surface of the magnetic film. When the coefficient of friction is adjusted by the lubricant, an undesirable temperature dependency of the coefficient of friction is caused, since the lubricant has different features under different temperatures.

The document EP-A 0 066 039 discloses a magnetic recording medium including a substrate carrying a coating of magnetic particles and non-magnetic load-bearing spherical particles dispersed in a binder, which said spherical particles protrude above the surface of the magnetic coating by not more than 1/5th of the thickness of said coating.

### OBJECT AND SUMMARY OF THE INVENTION

The present invention is intended to solve the above-mentioned problems, and the purpose of the present invention is to provide a coated type magnetic recording medium having improved electromagnetic transducing characteristics and running durability.

These objects are accomplished by a magnetic recording medium comprising:
a non-magnetic substrate (1); and
a magnetic film (6) which contains one or more layers and is present on one face of said non-magnetic substrate (1),
which is characterized in that
said magnetic film (6) has at least a surface magnetic layer (3) which contains a magnetic powder, alumina particles and spherical particles (5), said spherical particles (5) forming stud structures due to differences between the diameter of the spherical particles (5) and the thickness of the surface magnetic layer (3) wherein the spherical particles (5) have diameters in the range of from 0.5 to 1.5 times as large as the thickness of said surface magnetic layer (3) and are present in the surface magnetic layer (3) in an amount within the range of from 0.1 parts to 1 part per 100 parts by weight of the magnetic powder, said spherical particles (5) being selected from silicon dioxide particles and thermal black particles, exclusive of alumina particles.

The thickness of the surface magnetic layer depends on the wave length of recording. That is, when a usual wave length in the range of from 0.7 µm to 1.0 µm is used, a most suitable thickness of the surface magnetic layer is about 0.5 µm ± 0.1 µm. Furthermore, when a short wave length in the range of from 0.3 µm to 0.6 µm is used, a most suitable thickness of the surface magnetic layer is about 0.3 µm ± 0.1 µm. When the above-mentioned spherical particles are added to the surface magnetic layer of the magnetic film, since the surface magnetic layer is relatively thin (usually from 0.1 µm to 1 µm), numerous studs are formed on the surface of the surface magnetic layer of the magnetic film. This results in a small touching area towards magnetic heads, cylinders and posts of a video tape recorder or the like. Furthermore, a low coefficient of friction is achieved as a consequence of the small touching area of the surface magnetic layer of the magnetic film. The low coefficient of friction being connected with such a shape of the respective surface (i.e. numerous fine studs) has only a weak temperature dependency in comparison with the case of a coefficient of friction only being controlled by the lubricant. Further, in the present invention, an excessive amount of lubricant as mentioned above is never added to the magnetic film, so that those problems never occur, which are caused by an excessive amount of lubricant, i.e., poor adhesive properties of the magnetic film towards the non-magnetic substrate and a decreased dynamic strength of the magnetic film.

In the case, when the surface magnetic layer has a thickness of more than 2 µm, the thick magnetic layer requires, that the spherical particles have a large diameter, or the presence of a large amount of spherical particles. However, the use of spherical particles having a large diameter or the presence of a large amount of the spherical particles in each case results in an undesirable drop-out and/or noise during the recording/reproducing. Therefore it is not desirable to use a surface magnetic layer having a thickness of more than 2 µm.

Furthermore, it is preferable to use the present invention in a magnetic film having a multilayer structure, and it is more preferable that the surface magnetic layer of the magnetic film has a thickness in the range of from 0.1 µm to 0.6 µm. When the magnetic film consists of only one magnetic layer which has a thickness of less than 1 µm, the above-mentioned effect of the present invention is sufficient, in order to provide for the magnetic recording medium an improved electromagnetic transducing characteristic and improved running durability. As mentioned above, the coefficient of friction of the magnetic film is determined by these spherical particles.

In order to obtain a stable coefficient of friction even after repeated running of the respective magnetic tape, it is important that the surface of the above-mentioned spherical particles has a good sliding characteristic, since the surface of them operates as a touching face. And furthermore, it is important to prevent an undesirable omission of the spherical particles by means of strengthening a binding power between the spherical particles and the binder resin(s). Furthermore, a surface treatment of these spherical particles becomes an effective way.

The surface treatment agent used in the present invention can be chosen properly from the group consisting of fatty acids having at least 12 carbon atoms, for instance a lauric acid, a myristic acid, a palmitic acid, a stearic acid, an oleic acid, a behenic acid and the like only, in order to achieve the required lubricity of the spherical particles. Even in the case, when one of these acids is used without an additive in the form of a coupling agent, a sufficient effect is obtained. However, it is preferable to use a combination consisting of the acid and a coupling agent, having the effect of an increasing of the binding power between the spherical particles and the binder resins.

Coupling agents for this combined use include: silane group coupling agents, for instance p -[N - (2 - aminoethyl) aminomethyl] phenethyltrimethoxysilane;
N - (2 - aminoethyl) - 3 - aminopropylmethyldimetoxysilane; N - (2 - aminoethyl) - 3 - aminopropyltrimethoxysilane; 1 - (3 - aminopropyl) - 1, 1, 3, 3, 3 - pentamethyldisiloxane; 3 - aminopropyltriethoxysilane; 3 - aminopropyltris (trimethylsiloxy) silane; γ-(2 - aminoethyl) aminopropyltrimethoxysilane; γ - (2-aminoethyl) aminopropylmethyldimethoxysilane; γ-glycidoxypropyltrimethoxysilane; γ - mercaptopropyltrimethoxysilane; and titanate group coupling agents, for instance isopropyltriisostearoyltitanate; isopropyltris (dioctylpyrophosphate) titanate; isopropyltri (N-aminoethyl - aminoethyl) titanate; tetraoctylbis (ditridecylphosphate) titanate; bis (diocthylpyrophosphate) oxyacetatetitanate; bis (dioctylpyrophosphate) ethylenetitanate; isopropyltrioctanoyltitanate; isopropyltridecylbenzensulfonyltitanate; isopropyltri (dioctylphosphate) titanate; tetrapropylbis (dioctylphosphate) titanate.

Even in the case, when one of the above-mentioned coupling agents is used without an acid, a sufficient effect in order to achieve a good sliding characteristic is obtainable. As regards the coupling agent having no long-chain alkyl group, however, the combined use with one of the afore-mentioned fatty acids is more preferable.

In the present invention, a slight amount of the spherical particles is added to the surface magnetic layer of the magnetic film, in order to obtain both a small surface roughness and a low coefficient of friction. Furthermore, additionally the surface treatment can be carried out in order to prevent an omission of the spherical particles and to achieve a good lubricity of the same; and furthermore a more stable runability during many repetitions of the running is obtainable. As a consequence of these features, a magnetic recording medium having an improved electromagnetic transducing characteristic and an improved running durability is obtained.

While the novel features of the invention are set forth particularly in the appended claims, because the invention, both as regards the organization and the content, will be better understood and appreciated, in consideration of other objects and features thereof, on the base of the following detailed description taken in conjunction with tile drawings.

### BRIEF DESCRIPTION OF THE DRAWINGS

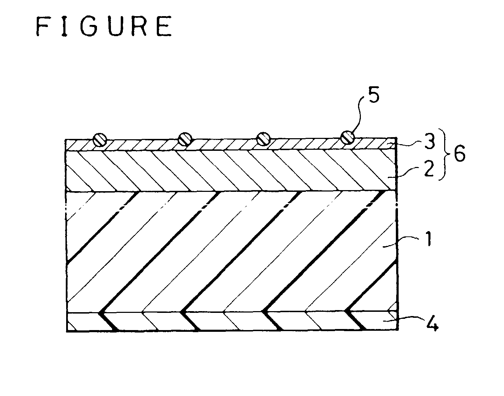

The attached figure is a cross-sectional view of a video tape sample of Experiment 1 according to an embodiment of the present invention.

It will be recognized, that the figure is a schematic representation for the purpose of the illustration and does not necessarily depict the actual, relative size or location of the elements as shown.

### DESCRIPTION OF THE PREFERRED EMBODIMENTS

The present invention is elucidated in detail with reference to the accompanying drawing and the following Experiments.

The attached figure is a cross-sectional view of a coated type magnetic recording medium of the present invention. In the figure, an underneath magnetic layer 2 is formed on a non-magnetic base film 1, a surface magnetic layer 3 is formed on the underneath magnetic layer 2, and a back coat layer 4 is formed on the side, which is opposite to the side of the surface magnetic layer 3, of the base film 1. Spherical particles (5) included in the surface magnetic layer 3 form a plenty of studs. A magnetic film 6 according to the invention consists of the surface magnetic layer 3 and the underneath magnetic layer 2. Therefore it is clear, that the magnetic film 6 has the structure of a multilayer.

### [Preparation of a magnetic coating material for the surface magnetic layer]

A magnetic coating material hereinafter referred to as [SM] for the surface magnetic layer 3 was prepared by the following steps.

Step(A): An adequate amount of an organic solvent mixture ^{*1)} was added to the following materials, in order to prepare a composition having a suitable viscosity:

| | |
|---|---|
| Magnetic powder^{*2)} | 100 parts^{*4)} |
| Spherical particles^{*3)} | 0.2 parts |
| Alumina(Al₂O₃) | 7 parts |
| Polyvinyl chloride group resin | 10 parts |
| Polyurethane resin | 10 parts. |

| | |
|---|---|
| ^{*2)} The magnetic powder was selected from the following material as shown in Table 1. | |
| ^{*3)} Spherical particles can be chosen from: spherical particles of silicon dioxide and thermal black, exclusive of alumina particles. The kind of spherical particles was selected from the following materials as shown in Table 2. An experiment on the base of the spherical particles of silicon dioxide is "SEAHOSTAR" (trade name), supplied by NIPPON SHOKUBAI KAGAKU KOGYO CO., LTD. JAPAN. Several types of "SEAHOSTAR" having a diameter in the respective range, i.e., 0.2 µm, 0.5 µm, 0.7 µm or 1.0 µm, falling in the area of from 0.2 µm to 1.2 µm, are obtainable. Furthermore, in each range, the distribution (scattering) of the respective diameter is controlled to be small. An experiment on the base of the thermal black particles is "ASAHI THERMAL" (trade name) (having a mean diameter of 0.15 µm, whereby the range of the diameters is from 0.05 µm to 0.2 µm),which particles are supplied by ASAHI CARBON CO., LTD. JAPAN, or alternatively is "SEVACARB MT" (trade name) (having a mean diameter of 0.67 µm, whereby the range of the diameters is from 0.10 µm to 1.5 µm), supplied by Columbian Chemical Company U.S.A. The particle size distribution (scattering) of these thermal black particles is broader than the particle size distribution of the above-mentioned spherical particles consisting of silicon dioxide. | |
| ^{*4)} Hereinafter the parts of the respective components are all by weight. | |

**Table 1**

| Magnetic powder | BET specific surface area (mm²/g) | Coercive force Oe |
|---|---|---|
| Material A (Ironoxide: Co-γ Fe₂O₃) | 47 | 680 |
| Material B (Ironoxide: Co-γ Fe₂O₃) | 48 | 950 |
| Material C (Metal particles including 95wt% of iron) | 51 | 1520 |

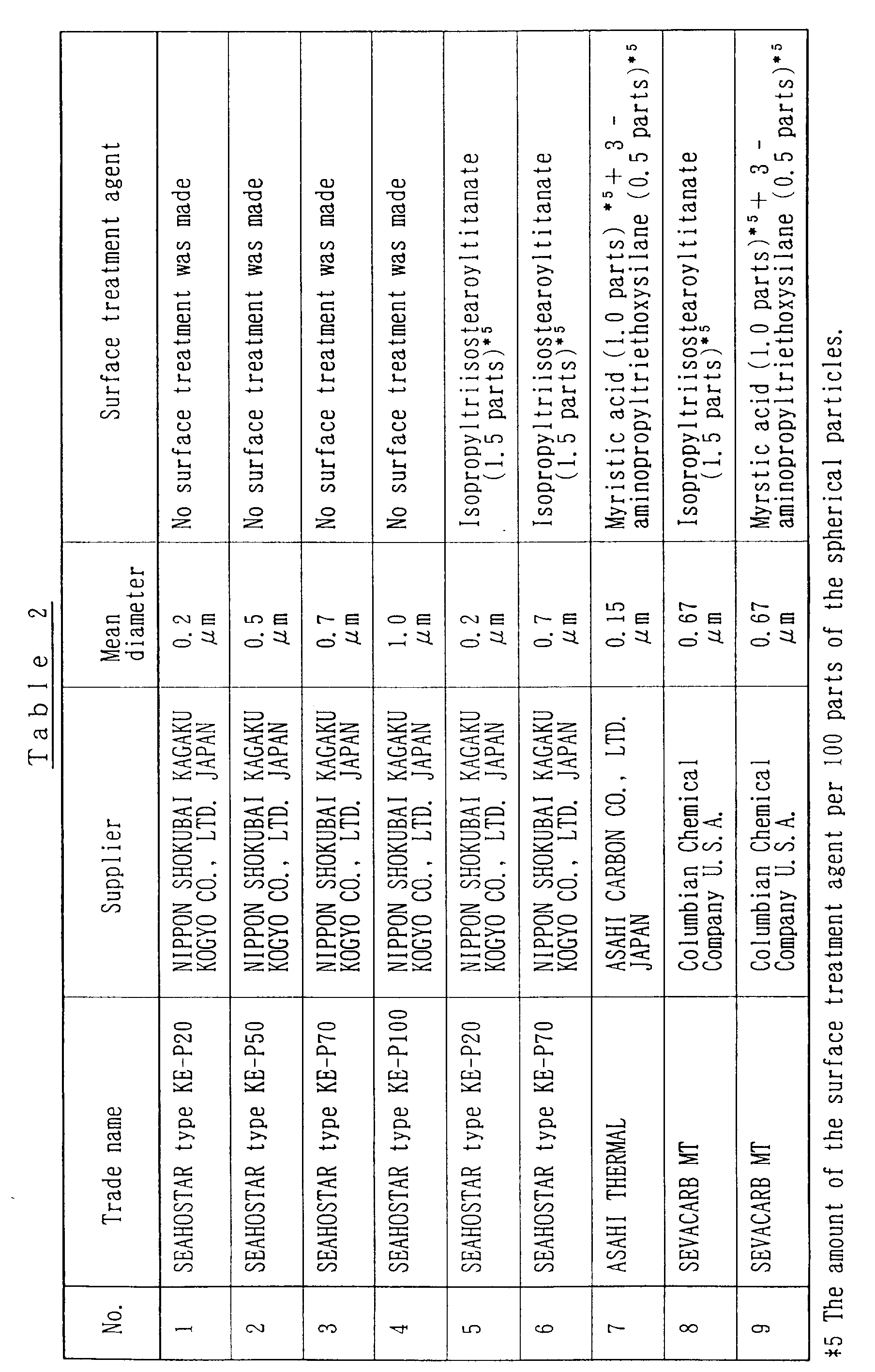

^{*1)} The organic solvent mixture consists of (Methylethylketone: Toluene : Cyclohexanone = 3 : 3 : 1)

Step(B): The milling and the dispersion of the composition were carried out in a two axial type kneading mixer and furthermore in a sand mill, in order to make an admixture;

Step(C): The following lubricant and hardener were added to the composition, and the composition, as forming the magnetic coating material [SM] for the surface magnetic layer was adjusted to have 30 weight% of solid content by the addition of the organic solvent mixture.

| [Lubricant] | |
|---|---|
| Myristic acid | 2 parts |
| Stearic acid | 1 part |
| n-Butyl stearate | 1 part |

| [Hardening] | |
|---|---|
| Polyisocyanate | 4 parts. |

### [Preparation of a magnetic coating material for the underneath magnetic layer]

A magnetic coating material hereinafter referred to as [UM] for the underneath magnetic layer 4 was prepared according to the same procedure as described referring to the coating magnetic material [SM], but with the exception, that carbon black (average particle size = 0.02 µm) was used instead of the spherical particle.

### Experiment 1

In this Experiment 1, the diameter of the spherical particles used in the surface magnetic layer was changed, in order to prepare the respective samples and comparison samples. The samples 1-1, 1-2, 1-3 and 1-4 and the Comparison samples 1-1, 1-2 and 1-3 were prepared in this Experiment 1.

### [Sample 1-1]

Video-tape samples of the Sample 1-1 were prepared by the following procedure:
Step(a): A magnetic coating material [UM] for the underneath magnetic layer was prepared by using the material A as shown in Table 1;
Step(b) : The magnetic coating material [UM] was applied on a 10-µm thick polyethylene terephthalate film as the non-magnetic base film 1, dried and subjected to a calendering process, in order to form a 3 µm thick underneath magnetic layer 2;
Step(c): A magnetic coating material [SM] for the surface magnetic layer was prepared by using the material B shown in Table 1 and the spherical particles No.1 as shown in Table 2;
Step(d): The magnetic coating material [SM] was applied on the underneath magnetic layer 2, dried and subjected to a calendering process, in order to form a 0.5 µm thick surface magnetic layer 3, and the curing(hardening) at 50 °C was carried out for 48 hours. The achieved, 0.5 µm thick surface magnetic layer is suitable for the recording of a usual wave length. However, the thickness of 0.5 µm corresponds to a respective distribution (= scattering), i.e., the average thickness of 0.5 µm was indeed in the range between 0.4 µm and 0.6 µm.
Step(e): An admixture in order to prepare the back coat layer 4 and mainly including carbon black was applied on the opposite face of the non-magnetic base film 1 to the one face coated by the magnetic film 6 and dried subsequently, in order to form a 0.7 µm thick back coat layer 4; and
Step(f): The applied film was slit, in order to achieve samples in form of a 1/2 inch video tape, which are set in video tape cassettes.

### [Samples 1-2, 1-3 and 1-4]

Video-tape samples on the base of these Samples 1-2, 1-3 and 1-4 were prepared by the same procedure as described above referring to the Sample 1-1, but with the exception, that the diameter of the spherical particles used in the Step(c) was varied as follows:
As regards the Sample 1-2, the spherical particles No.2 as shown in Table 2 were used,
As regards the Sample 1-3, the spherical particles No.3 as shown in Table 3 were used, and
As regards the Sample 1-4, the spherical particles No.4 shown in table 2 were used.

### [Comparison sample 1-1]

Video-tape samples on the base of this Comparison sample 1-1 were prepared by the same procedure as described above referring to the Sample 1-1, but with the exception, that no spherical particles were used in the Step(c).

### [Comparison sample 1-2]

Video-tape samples on the base of this Comparison sample 1-2 were prepared by the same procedure as described above referring to the Sample 1-2, but with the exception of the omission of the Steps(a) and (b) and therefore the omission of the forming of the underneath magnetic layer 2. Furthermore, in the step(d) a 3.5 µm thick surface magnetic layer 3 was formed. Therefore, regarding the Comparison sample 1-2, the magnetic film 6 has an exceedingly thick surface magnetic layer 3.

### [Comparison sample 1-3]

Video-tape samples on the base of this Comparison sample 1-3 were prepared by the same procedure as described above referring to the Comparison sample 1-2, but with the exception, that in the Step(c) the spherical particles No.3 as shown in Table 2 were used. Therefore, regarding the Comparison sample 1-3, the magnetic film 6 also has an exceedingly thick surface magnetic layer 3.

The following evaluation tests were carried out on the base of different video tape samples obtained in the Experiment 1.

### (1)[Surface roughness of the magnetic film]

The surface roughness of the magnetic film was measured by a non-contact type three dimensional surface roughness meter "TOPO-3D" manufactured by WYKO CO., LTD. U.S.A.

### (2)[Coefficient of friction of the magnetic film]

The tape sample was wound on and around a post of 3mmφ made of stainless steel at a winding angle of 180° ; the tension at the winding-in side of the post was 20.0g; and the sliding speed was 5cm/sec. The coefficient of friction was obtained by a measured tension at the feeding-out side of the post and the tension at the winding-in side.

In order to obtain the temperature dependency of the coefficient of friction, measurements were made at the respective environmental temperatures of 3° C, 23° C and 40° C.

In order to test the stability of the coefficient of friction, the coefficient of friction was measured after the repeating of 200 times of the above-mentioned round-trip running under the conditions of 20 gr tension at the winding-in side and at room temperature.

### (3) [Carrier-to-noise ratio]

Since the Carrier-to-noise ratio (hereinafter it is abbreviated to C/N ratio) is considered to be influenced by the surface roughness of the magnetic film, the C/N ratio at 7 MHz ± 1 MHz was examined by using a VHS system VTR type "NV-FS900" manufactured by Matsushita Electric Industrial Co., Ltd. JAPAN. 7 MHz correspond to a usual wave length (i.e. 0.82 µm) as used for the recording. The C/N ratio was expressed in terms of a relative value referring to the C/N ratio of a tape obtained in the Comparison sample 1-1, which was assumed to be 0 dB.

Table 3 shows the results of these evaluation tests corresponding to the respective sample tapes.

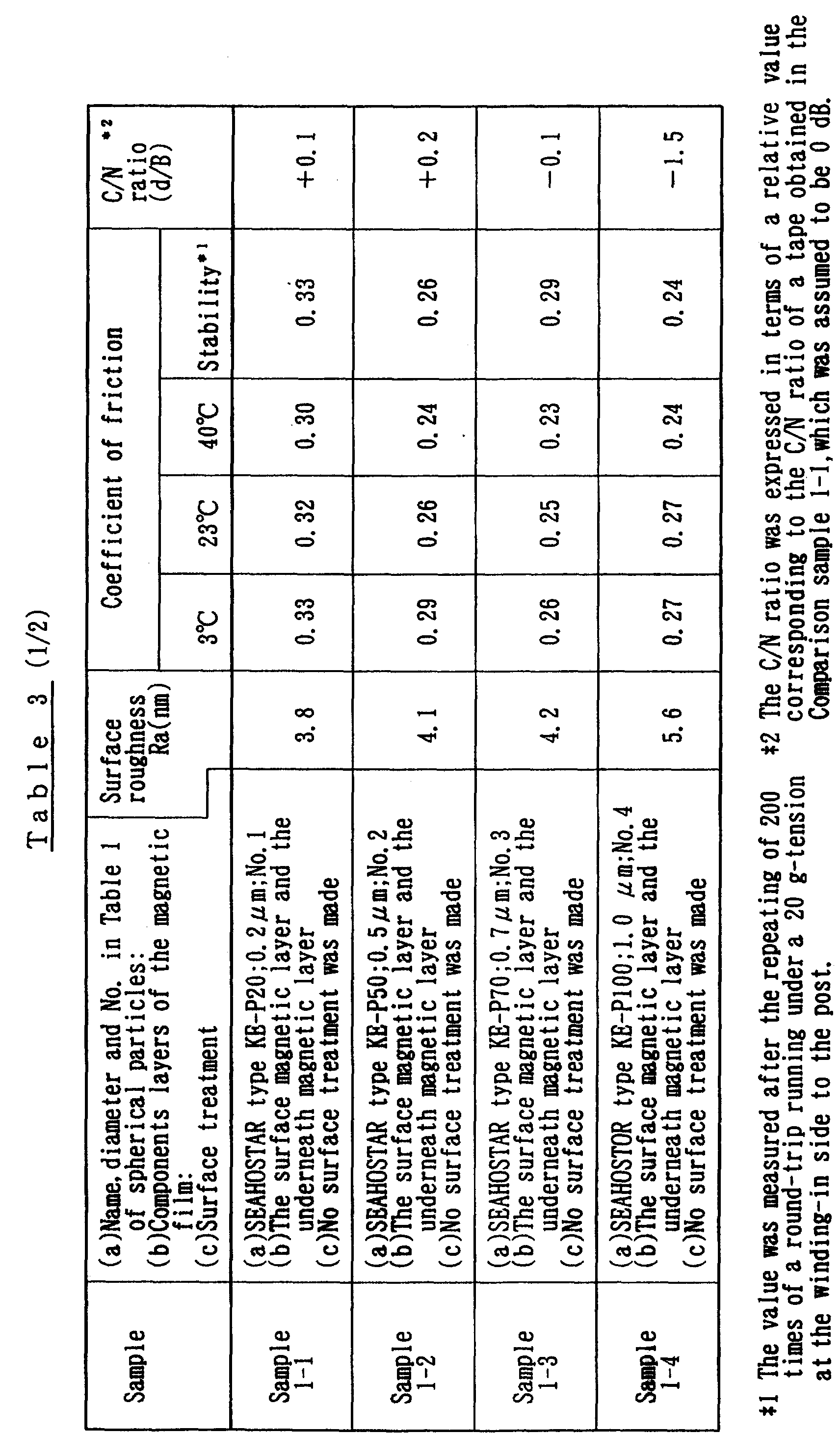

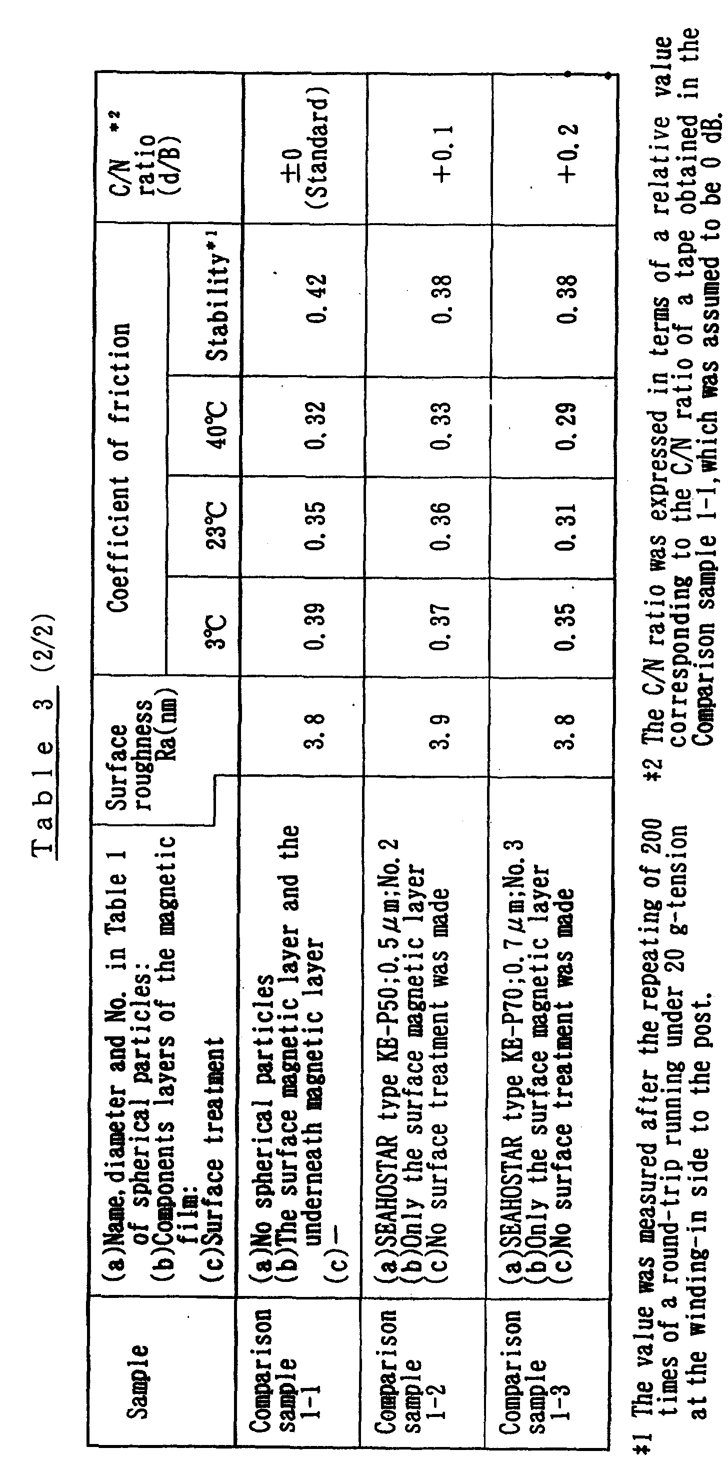

From the results as shown in Table 3, the Sample 1-1, wherein the spherical particles have a diameter of 0.2 µm, which is less than only a half of the thickness (i.e. 0.5 µm) of the surface magnetic layer were used, showed a relatively smaller coefficient of friction than that of the Comparison sample 1-1. However, the effect obtained on the base of the Sample 1-1 was not large.

In contrast, the Samples 1-2, 1-3 and 1-4, wherein the spherical particles according to the No.2, No.3 and No.4 were used respectively, each showed a remarkable good coefficient of friction at every environmental temperature, and furthermore also a good stability of the same. However, as regards the Sample 1-4, the respective spherical particles having a diameter of 1.0 µm, which is two times as large as the thickness (i.e. 0.5 µm) of the surface magnetic layer were used, so that the surface roughness becomes large. As a consequence, this feature induced a bad influence in respect of the C/N ratio.

Although the spherical particles were used in the Comparison samples 1-2 and 1-3, they gave rise to only a small reduction of the coefficient of friction and a weak effect due to the addition of the spherical particles, since the magnetic film of the Comparison samples 1-2 and 1-3 has an excessively thick (i.e. 3.5 µm) surface magnetic layer. Regarding our experiment, the surface magnetic layer which has a thickness of less than about 1 µm showed a sufficient effect due to the addition of the spherical particles. Furthermore, the magnetic recording medium which has a thin surface magnetic layer (i.e. from 0.3 µm to 1 µm) is used as a magnetic film for a flexible disk or the like.

### Experiment 2

As regards this Experiment 2, the amount of the spherical particles as added to the surface magnetic layer was changed in the Step(A) of the [Preparation for a magnetic coating material for the surface magnetic layer] referring to the respective samples. The samples 2-1, 2-2, 2-3, 2-4 and 2-5 were formed in this Experiment 2.

### [Samples 2-1, 2-2, 2-3, 2-4 and 2-5]

Video-tape samples on the base of these Samples 2-1, 2-2, 2-3, 2-4 and 2-5 were prepared by the same procedure as described above referring to the Sample 1-3, but with the exception that the amount of the respective spherical particles was changed as follows:
As regards the Sample 2-1, the amount was 0.05 parts per 100 parts of the magnetic powder;
As regards the Sample 2-2, the amount was 0.1 parts per 100 parts of the magnetic powder;
As regards the Sample 2-3, the amount was 0.5 parts per 100 parts of the magnetic powder;
As regards the Sample 2-4, the amount was 1.0 parts per 100 parts of tile magnetic powder; and
As regards the Sample 2-5, the amount was 1.2 parts per 100 parts of the magnetic powder.

The afore-mentioned evaluation tests were carried out on the base of different video tape samples obtained in this Experiment 2. Table 4 shows the results of the evaluation tests corresponding to the respective sample tapes, including the Sample 1-3 and the Comparison sample 1-1 of the Experiment 1.

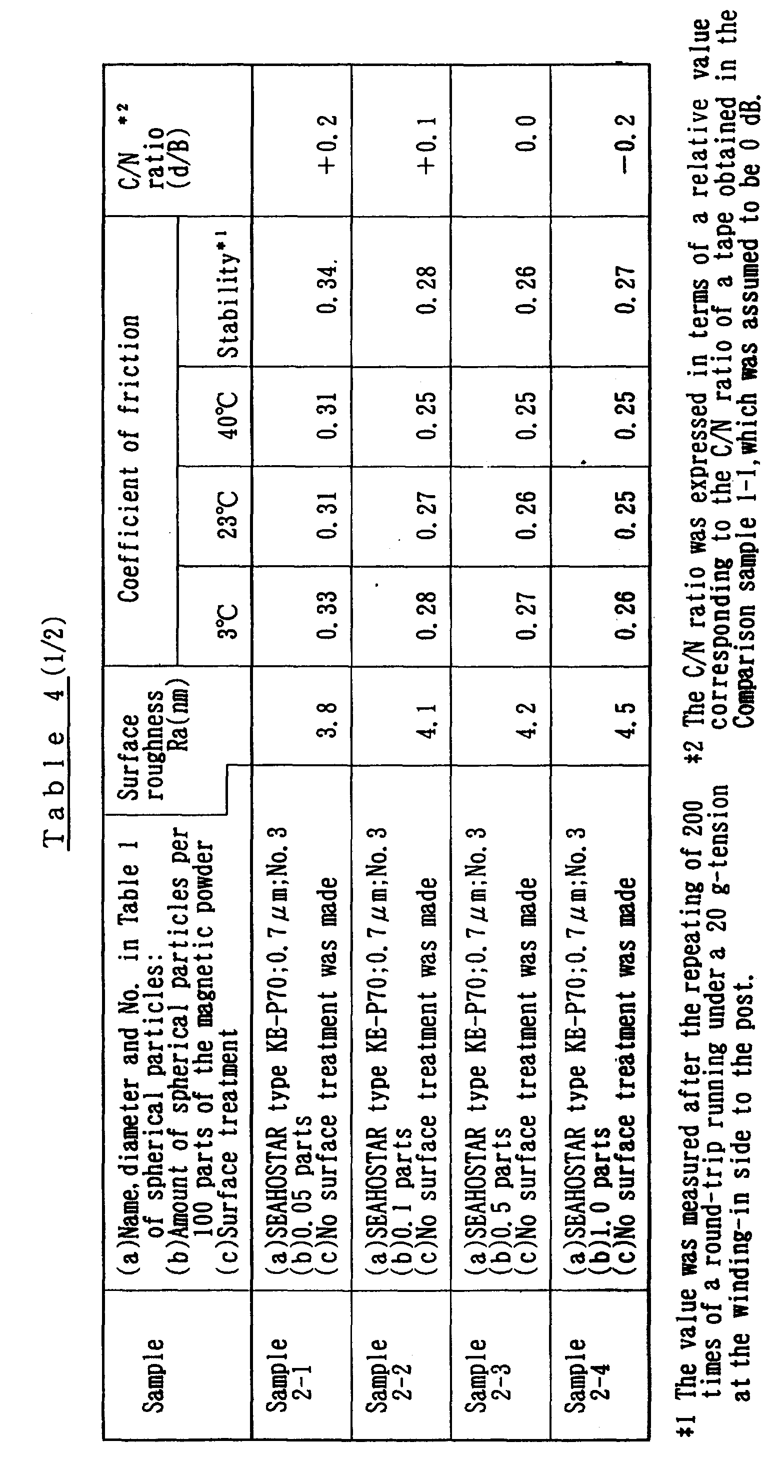

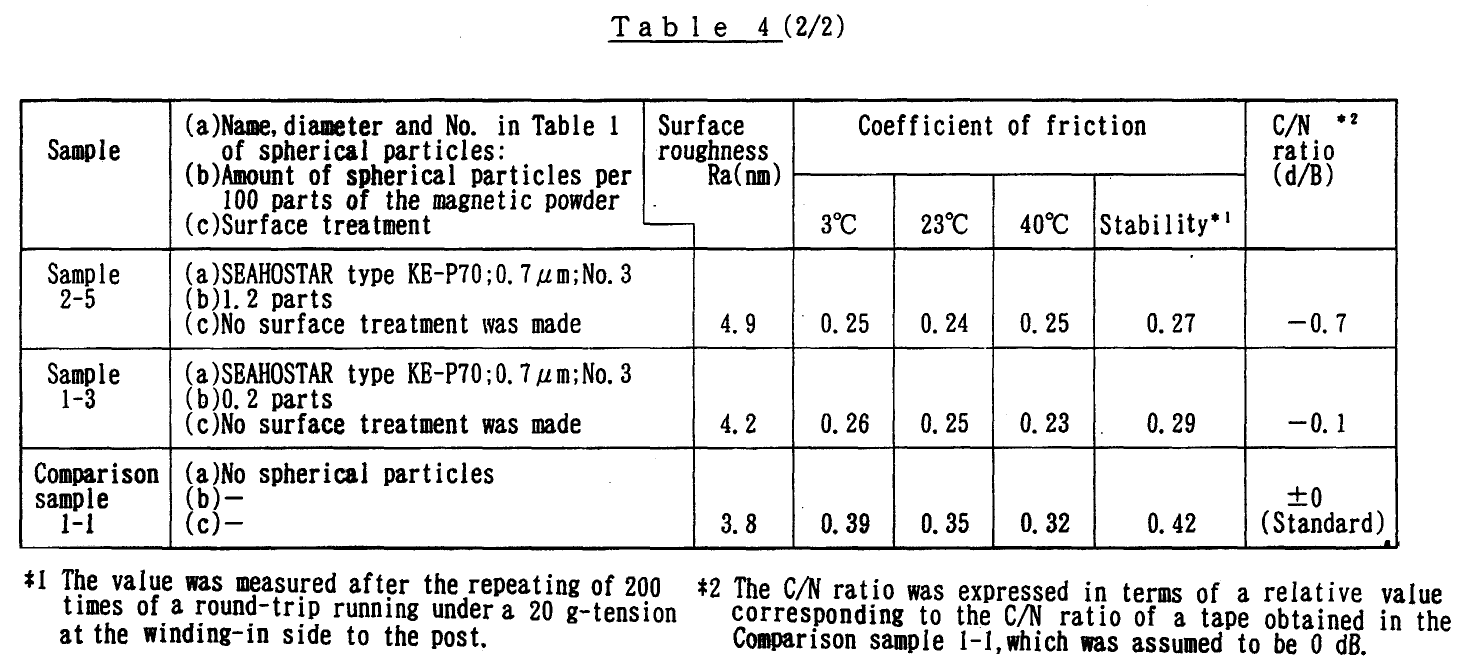

From the results as shown in Table 4 can be concluded, that 0.05 parts of the spherical particles gave rise to some effect, in order to achieve the lowering of the coefficient of friction indeed, however, it is necessary to add more than 0.1 parts of the same, in order to obtain a remarkable effect. If an excessive amount of (i.e. 1.2 parts) of the spherical particles was added corresponding to the sample 2-5, the surface roughness undesirably became large, so that the C/N ratio was deteriorated.

### Experiment 3

The effect of a surface treatment of the spherical particles was studied in this Experiment 3.

Two types of surface treatments, wherein different surface treatment agents were used respectively, were carried out, in order to prevent the omission of the spherical particles and to achieve a good lubricity of the same.

### [Sample 3-1]

Video-tape samples on the base of this Sample 3-1 were prepared by the same procedure as described above referring to the Sample 1-3, but with the exception, that the spherical particles after a surface treatment (i.e. corresponding to No.6 as shown in Table 2) were used. The surface treatment was carried out by using 1.5 parts of isopropyltriisostearoyltitanate per 100 parts of the spherical particles. The isopropyltriisostearoyltitanate is one of the titanate group coupling agents.

### [Sample 3-2]

Video-tape samples on the base of this Sample 3-2 were prepared by the same procedure as described above referring to the Sample 3-1, but with the exception, that 0.2 parts of the "SEVACARB MT" after the same surface treatment (i.e. corresponding to No.8 as shown in Table 2) as described above referring to the Sample 3-1 were used as the spherical particles instead of the respective "SEAHOSTAR type KE-P70" (i.e. No.6 shown in Table 2).

### [Sample 3-3]

Video-tape samples on the base of this Sample 3-3 were prepared by the same procedure as described above referring to the Sample 3-2, but with the exception, that the "SEVACARB MT" after a different surface treatment (i.e. corresponding to No.9 as shown in Table 2) was used. As mentioned above, a different surface treatment was carried out, using both 1.0 parts of myristic acid and 0.5 parts of 3-aminopropyltriethoxysilane per 100 parts of the spherical particles. The myristic acid is one of the fatty acids, and the 3-aminopropyltriethoxysilane is one of the silane group coupling agents.

The afore-mentioned evaluation tests were carried out on the base of different video tape samples obtained in this Experiment 3. Table 5 shows the results of the evaluation tests corresponding to the respective sample tapes, including the reference Sample 1-3 of the Experiment 1.

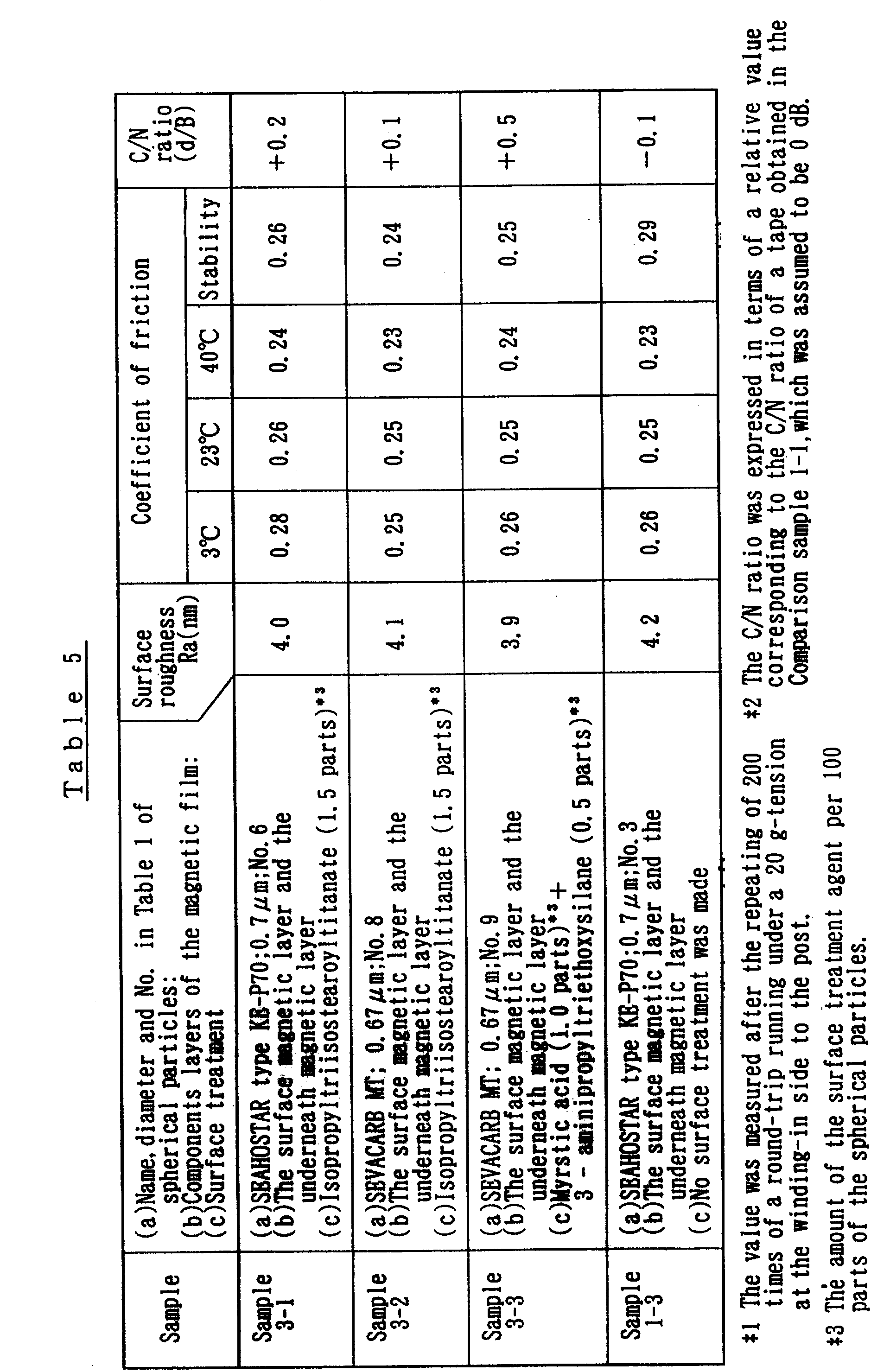

From the results as shown in Table 5 can be concluded, that the effect of the surface treatment was not so large, but a certain effect upon the stability of the coefficient of friction was shown. Especially, after the repeating of the round-trip running, a remarkably stable coefficient of friction was obtained.

Suitable coupling agents for the surface treatment of the present invention include: silane group coupling agents, for instance p -[N - (2-aminoethyl) aminomethyl] phenethyltrimethoxysilane;
N - (2 - aminoethyl) - 3 - aminopropylmethyldimethoxysilane; N - (2 aminoethyl) - 3 - amino-propyltrimethoxysilane; 1 - (3 - aminopropyl) - 1, 1, 3, 3, 3 - pentamethyldisiloxane; 3 - aminopropyltriethoxysilane; 3 - aminopropyltris (trimethylsiloxy) silane; γ-(2 - aminoethyl) aminopropyltrimethoxysilane; γ - (2-aminoethyl) aminopropylmethyldimethoxysilane; γ-glycidoxypropyltrimethoxysilane; γ - mercaptopropyltrimethoxysilane; and titanate group coupling agents, for instance Isopropyltriisostearoyltitanate; isopropyltris (dioctylpyrophosphate) titanate; isopropyltri (N-aminoethyl - aminoethyl) titanate; tetraoctylbis (ditridecylphosphate) titanate; bis (dioctylpyrophosphate) oxyacetatetitanate; bis (dioctylpyrophosphate) ethylenetitanate; isopropyltrioctanoyltitanate; isopropyltridecylbenzensulfonyltitanate; isopropyltri (dioctylphosphate) titanate; tetrapropylbis (dioctylphosphate) titanate.

There are several ways for carrying out the surface treatment. For instance, the following procedure is elucidated as a possible experiment:
(a) Spherical particles are placed in a planetary mixer;
(b) The surface treatment agent is added by way of small increments, while the fine particles are mixed by rotation of blades;
(c) Hot water at 50°C is flown into the cooling jacket of the planetary mixer vessel during mixing; and
(d) The mixing is carried out for two hours after the addition of the surface treatment agent.

The amount of the added surface treatment agent varies depending on the surface area of the spherical particles. The preferable amount of the agent is in the range of from 0.5 parts to 3 parts per 100 parts of the spherical particles.

The above-mentioned Experiments 1, 2 and 3 relate to a Co-γ Fe₂O₃ type magnetic recording medium, which is conventionally used in a usual wave length in order to carry out the recording. The present invention is further applicable to a metal particles type magnetic recording medium which is suitable for the use on the base of a short recording wave length. The following Experiments 4 and 5 relate to the metal particles type magnetic recording medium.

### Experiment 4

The samples 4-1, 4-2, 4-3, 4-4 and 4-5, and the respective Comparison sample 4-1 were prepared on the base of this Experiment 4.

### [Sample 4-1]

Video-tape samples on the base of this Sample 4-1 were prepared by the same procedure as described above referring to the sample 1-1, but with the exception, that:
As regards the Step(a): the magnetic coating material [UM] for the underneath magnetic layer was prepared by using the material B (Iron oxide) (which has a relatively large coercive force in comparison with that of the material A), as shown in Table 1;
As regards the Step(c): the magnetic coating material [SM] for the surface magnetic layer was prepared by using the material C (metal particles) as shown in Table 1, and furthermore, the amount of the spherical particles was changed to 0.3 parts instead of 0.2 parts; and
as regards the Step(d): the magnetic coating material [SM] was applied, dried and subjected to a calendering process, in order to form a 0.3 µm thick surface magnetic layer 3. Due to this 0.3 µm thick surface magnetic layer, the respective recording medium is suitable for the recording on the base of a short wave length. The thickness of 0.3 µm however is subjected to a thickness distribution (= scattering); therefore the average thickness of 0.3 µm did correspond to a thickness distribution, which was in the range between 0.2 µm and 0.4 µm.
The sample 4-1 having the above-described surface magnetic layer is one of the metal particles type magnetic recording media.

### [Samples 4-2, 4-3, 4-4 and 4-5]

Video-tape samples on the base of these Samples 4-2, 4-3, 4-4 and 4-5 were made by the same procedure as described above referring to the Sample 4-1, but with the exception, that the kind of the respective spherical particles as used in the Step(c) was as follows:
As regards the Sample 4-2, the spherical particles No.2 as shown in Table 2 were used,
As regards the Sample 4-3, the spherical particles No.3 as shown in Table 2 were used.
As regards the Sample 4-4, the spherical particles No.5 as shown in Table 2 were used, and
As regards the Sample 4-5, the spherical particles No.7 as shown in Table 2 were used.

### [Comparison sample 4-1]

Video-tape samples on the base of this Comparison sample 4-1 were prepared by the same procedure as described above referring to the Sample 4-1, but with the exception, that no spherical particles were used in the Step(c).

The afore-mentioned evaluation tests, with the exception of the evaluation test referring to the [C/N ratio] were made on the base of different video tape samples obtained in this Experiment 4. In this Experiment 4 and the next Experiment 5, an evaluation test in order to determine the [C/N ratio at short wave length] was made, since the Experiments 4 and 5 relate to the metal particles type magnetic recording medium. Table 6 shows the results of the evaluation tests corresponding to the respective sample tapes.

### [C/N ratio at short wave length]

Since the C/N ratio is considered to be influenced by the surface roughness of the magnetic film, the C/N ratio at 7.7 MHz ± 1 MHz was examined by using a Hi-Band 8mm system VTR type "CCD-V900", manufactured by Sony CORPORATION JAPAN. 7.7 MHz corresponds to a short recording wave length (i.e. 0.49 µm). The C/N ratio at short wave length was expressed in terms of a relative value referring to the C/N ratio at short wave length of a tape obtained in the Comparison sample 4-1, which was assumed to be 0 dB. Samples and comparison samples set in 8mm video tape cassettes were used in this evaluation test of course.

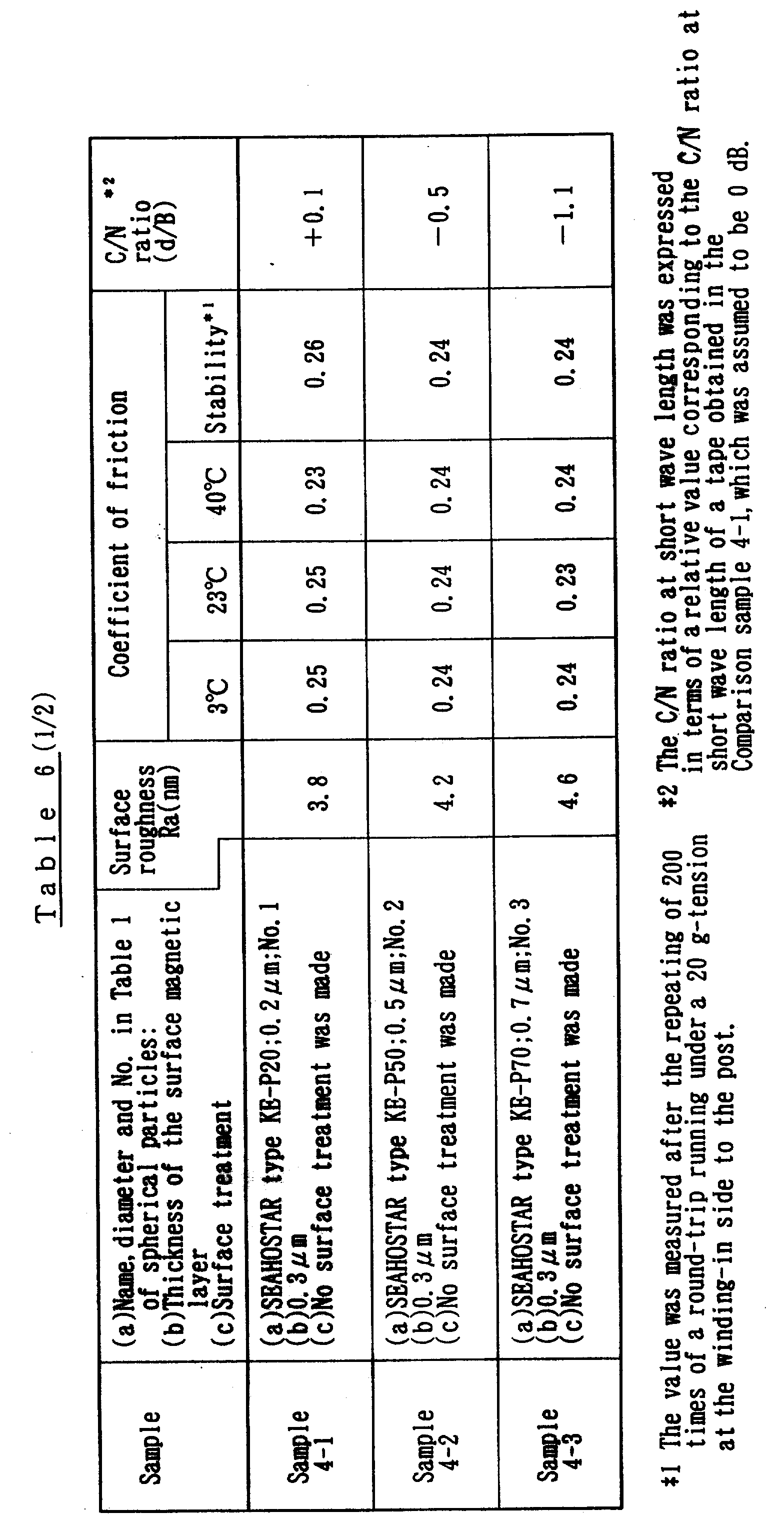

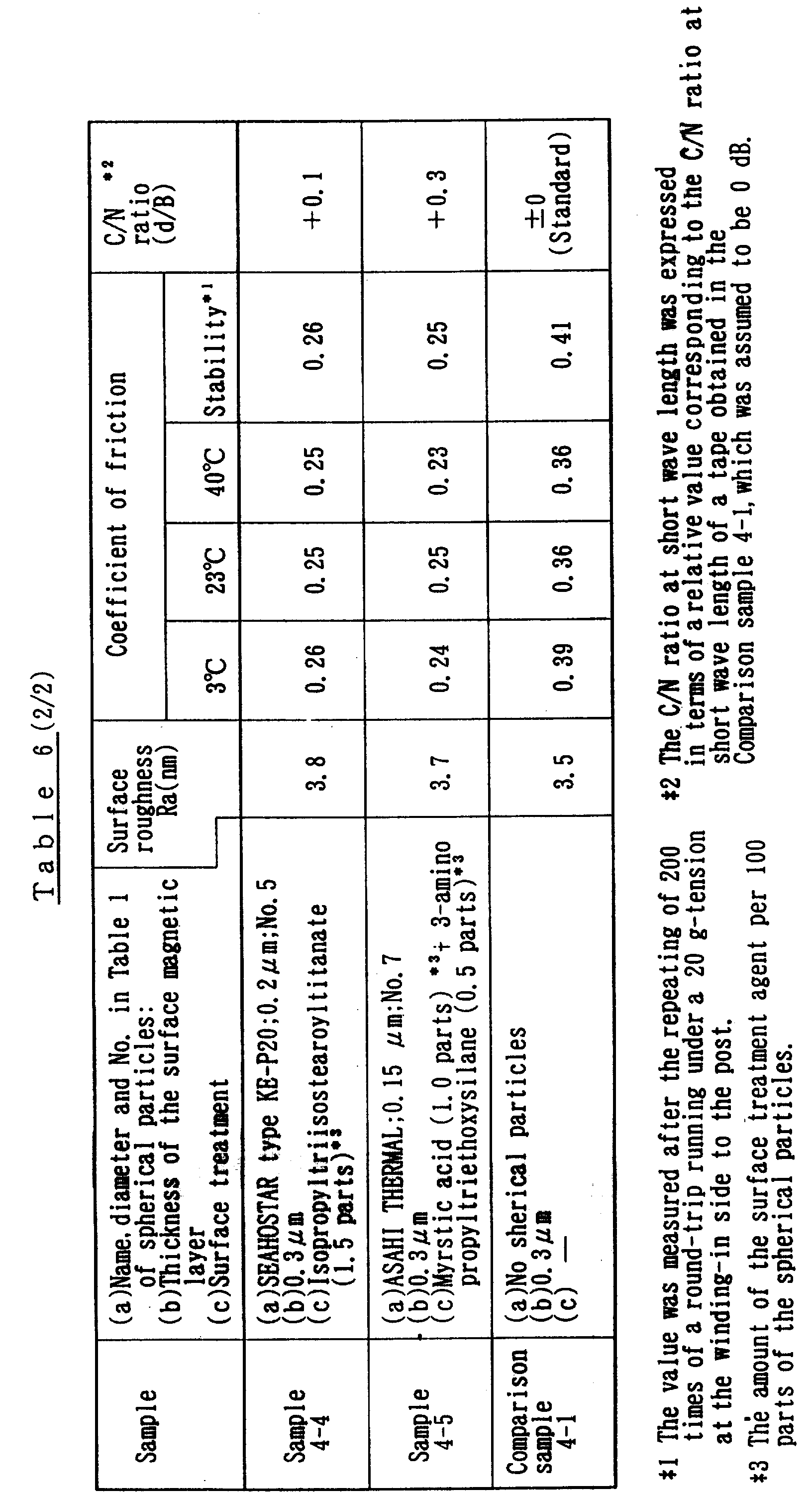

From the results as shown in Table 6 can be concluded, that the metal particle type magnetic recording medium having a thin surface magnetic layer (i.e. 0.3 µm thick surface magnetic layer) showed a significant effect due to the presence of the spherical particles, and furthermore a stable and low coefficient of friction was obtained. The Samples 4-2 and 4-3, wherein the spherical particles having a diameter (i.e. 0.5 µm and 0.7 µm), which is larger than one and a half times of the thickness (i.e. 0.3 µm) of the surface magnetic layer were used showed a low and stable coefficient of friction. However, a reduced C/N ratio was observed as a consequence of the deteriorated surface roughness. Therefore, the spherical particles used in the surface magnetic layer should have a diameter being in the range of from 0.5 to 1.5 times as large as the respective thickness of the surface magnetic layer as the same. And furthermore, as regards the recording on the base of a short wave length, the demand for the provision of a suitable recording/reproducing characteristic becomes more severe, and therefore the more preferable range of the diameter of the spherical particles is from 0.15 µm to 0.2 µm.

Regarding the metal particle type magnetic recording medium, the magnetic powder used in the underneath magnetic recording layer will be changed according to the requirements in order to achieve a desirable magnetic characteristic. As regards our experiment, in the case, when the magnetic powder as used in the underneath magnetic recording layer was changed, a similar result as mentioned above was obtained.

The following evaluation test was selectively carried out on the base of different video tape samples obtained in the foregoing Experiments.

### [Running durability]

After the repeating of 100 times of the running while utilizing the VHS system VTR type "NV-FS900" (in the playback state at a running speed of 3.3 cm/sec) of each video tape sample under the conditions of 40 °C --- 80 %RH, the shape and damage of the respective tape were observed.

The test in order to determine the [Running durability] was carried out on the base of the Samples 1-2, 1-3, 2-1, 2-2, 3-1, 3-3 and 4-4, and the respective Comparison samples 1-1, 1-2, and 4-1. The Table 7 shows the results of the test.

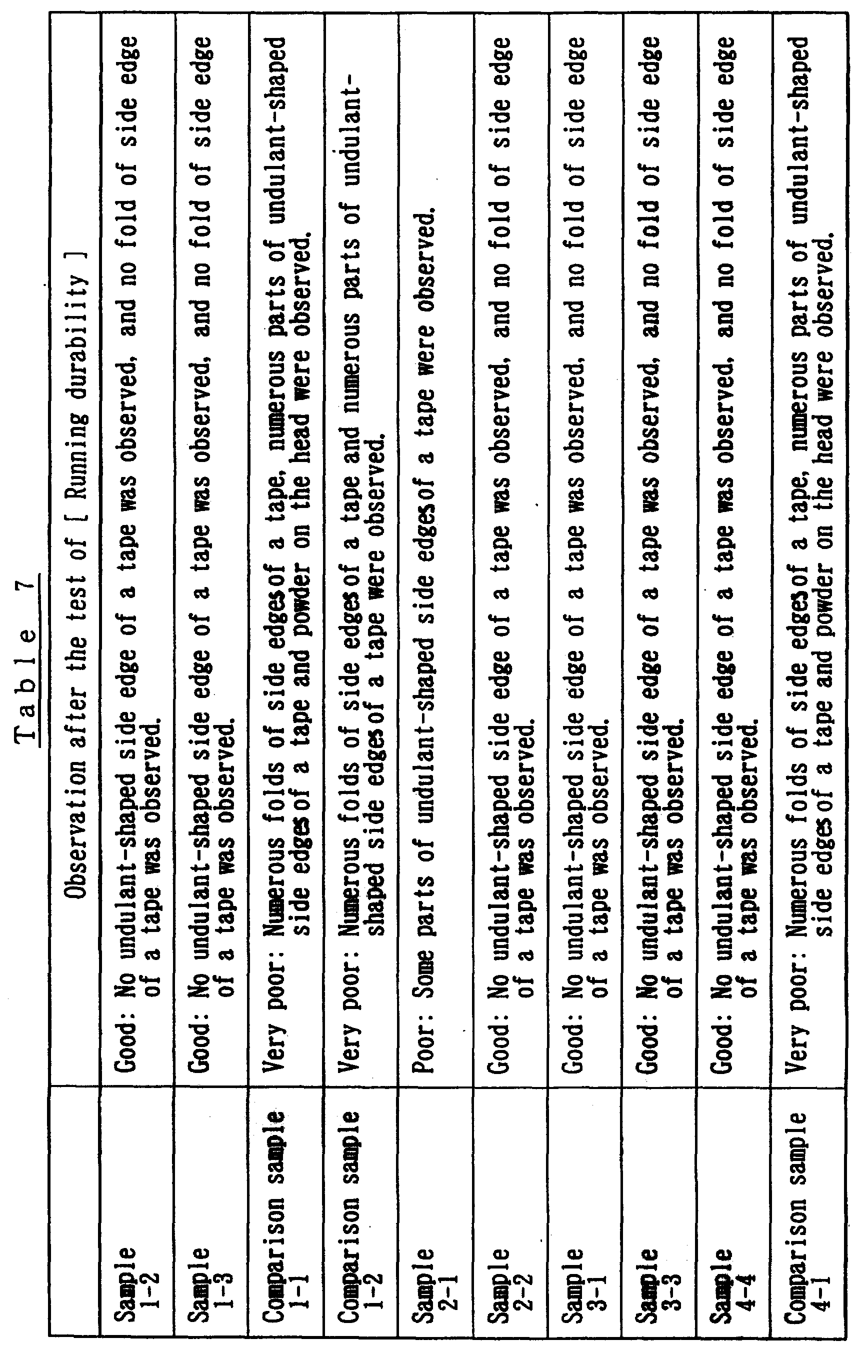

From the results as shown in Table 7, the following conclusions were obtained:

The Comparison samples 1-1 and 4-1, wherein no spherical particles were used, both showed a large coefficient of friction. This effect resulted in unusual running while utilizing the VTR, so that numerous undulant-shaped side edges and folds of side edges were observed.

Although the spherical particles were used in the Comparison sample 1-2, an effect due to the presence of the spherical particles was not obtained, because the large thickness of the magnetic film consists of only one surface magnetic layer. Therefore, the Comparison sample 1-2 showed a large coefficient of friction. This coefficient resulted in an unusual running while utilizing the VTR, so that numerous undulant-shaped side edges and folds of side edges were observed.

The Sample 2-1, wherein a small amount of the spherical particles was used, showed only a weak effect, so that some deformations in form of undulant-shaped side edges were observed.

The other Samples as shown in Table 1 showed a sufficient effect of the spherical particles, so that an unusual change was not observed.

Regarding our experiment, the material of the respective magnetic powder as used in the magnetic film had no relation with any effect according to the present invention.

Apart from the magnetic tape of these Experiments 1 --- 5, further experiments referring to flexible disks were made similarly in our experiment, and a sufficient effect was also obtained.

Although the present invention has been described in terms of the presently preferred embodiments, it is to be understood that such a disclosure is not to be interpreted as limiting. Various alterations and modifications will undoubtless become apparent to the persons skilled in the art after having read the above-mentioned disclosure.

## Claims

1. A magnetic recording medium comprising:
a non-magnetic substrate (1); and
a magnetic film (6) which contains one or more layers and is present on one face of said non-magnetic substrate (1),
**characterized in that**
said maqnetic film (6) havinq at least a surface magnetic layer (3) which contains a magnetic powder, alumina particles and spherical particles (5), said spherical particles (5) forming stud structures due to differences between the diameter of the spherical particles (5) and the thickness of the surface magnetic layer (3) wherein the spherical particles (5) have diameters in the range of from 0.5 to 1.5 times as large as the thickness of said surface magnetic layer (3) and are present in the surface magnetic layer (3) in an amount within the range of from 0.1 parts to 1 part per 100 parts by weight of the magnetic powder, said spherical particles (5) being selected from silicon dioxide particles and thermal black particles, exclusive of alumina particles.

2. A magnetic recording medium in accordance with claim 1 wherein;
said magnetic film (6) further has an underneath magnetic layer (2).

3. A magnetic recording medium in accordance with claim 1 wherein:
said surface layer (3) has thickness in the range of from 0.4 µm to 0.6 µm when a wave length within a predetermined usual wave length region is used.

4. A magnetic recording medium in accordance with claim 1 wherein;
said surface layer (3) has a thickness in the range of from 0.2 µm to 0.4 µm when a wave length within a predetermined short wave length region is used.

5. A magnetic recording medium in accordance with claim 4 wherein;
said spherical particles (5) have a diameter in the range of from 0.15 µm to 0.2 µm.

6. A magnetic recording medium in accordance with claim 1 wherein;
said spherical particles (5) are surface treated with an agent for giving lubricity.

7. A magnetic recording medium in accordance with claim 6 wherein;
said agent is at least one member selected from the group consisting of:
p - [N - (2 - aminoethyl) aminoethyl] phenethyl-trimethoxysilane; N - (2 - aminoethyl ) - 3 - aminopropylmethyldimethoxysilane; N - (2 - aminoethyl) - 3 - aminopropyltrimethoxysilane ; 1 - (3 - aminopropyl) - 1, 1, 3, 3, 3 - pentamethyldisiloxane; 3 - aminopropyltriethoxysilane; 3 - aminopropyltris (trimethylsiloxy) silane; γ-(2 - aminoethyl) aminopropyltrimethoxysilane; γ - (2-aminoethyl) aminopropylmethyldimethoxysilane; γ-glycidoxypropyltrimethoxysilane; γ - mercaptopropyl-trimethoxysilane;
isopropyltriisostearoyltitanate; isopropyltris (dioctylpyrophosphate) titanate; isopropyltri (N-aminoethyl - aminoethyl) titanate; tetraoctylbis (ditridecylphosphate) titanate; bis (diocthylpyrophosphate) oxyacetatetitanate: bis (dioctylpyrophosphate) ethylenetitanate; isopropyltrioctanoyltitanate; isopropyltridecylbenzensulfonyltitanate; isopropyltri (dioctylphosphate) titanate; tetrapropylbis (dioctylphosphate) titanate;
a lauric acid, a myristic acid, a palmitic acid, a stearic acid, an oleic acid, and a behenic acid
wherein said acids have at least 12 carbon atoms.

8. A magnetic recording medium in accordance with claim 3 wherein:
said spherical particles (5) are surface treated with isopropyltriisostearoyl titanate.

9. A magnetic recording medium in accordance with claim 3 wherein:
said spherical particles (5) are surface treated with a fatty acid having at least 12 carbon atoms and 3-aminopropyltriethoxysilane.

10. A magnetic recording medium in accordance with claim 4 wherein;
said spherical particles (5) are surface treated with isopropyltriisostearoyl titanate.

11. A magnetic recording medium in accordance with claim 4 wherein;
said spherical particles (5) are surface treated with a fatty acid having at least 12 carbon atoms and 3-aminopropyltriethoxysilane.

## Patentansprüche

1. Ein magnetisches Aufzeichnungsmedium, umfassend:
ein nichtmagnetisches Substrat (1); und
einen Magnetfilm (6), welcher eine oder mehrere Schichten enthält und sich an einer Fläche des besagten nichtmagnetischen Substrats (1) befindet,
dadurch gekennzeichnet, daß
der besagte Magnetfilm (6) mindestens eine magnetische Oberflächenschicht (3) aufweist, welche ein Magnetpulver, Aluminiumoxidteilchen und kugelförmige Teilchen (5) enthält, daß diese kugelförmigen Teilchen (5) aufgrund von Unterschieden im Durchmesser der kugelförmigen Teilchen (5) und der Dicke der magnetischen Oberflächenschicht (3) noppenartige (stud) Strukturen bilden, wobei die kugelförmigen Teilchen (5) Durchmesser im Bereich des 0,5- bis 1,5-fachen der Dicke der genannten magnetischen Oberflächenschicht (3) aufweisen, und in der magnetischen Oberflächenschicht (3) in einer Menge im Bereich von 0,1 bis 1 Gewichtsteil je 100 Gewichtsteile des Magnetpulvers vorliegen, und daß die genannten kugelförmigen Teilchen (5) ausgewählt sind aus Siliciumdioxidteilchen und Thermalruß-Teilchen, aber keine Aluminiumoxidteilchen sind.

2. Ein magnetisches Aufzeichnungsmedium nach Anspruch 1, in welchem der genannte Magnetfilm (6) außerdem eine darunter angeordnete Magnetschicht (2) aufweist.

3. Ein magnetisches Aufzeichnungsmedium nach Anspruch 1, in welchem die genannte Oberflächenschicht (3) bei einer Wellenlänge in einem vorbestimmten Bereich üblicher Wellenlänge eine Dicke im Bereich von 0,4 µm bis 0,6 µm aufweist.

4. Ein magnetisches Aufzeichnungsmedium nach Anspruch 1, in welchem die genannte Oberflächenschicht (3) bei einer Wellenlänge in einem vorbestimmten Bereich kurzer Wellenlänge eine Dicke im Bereich von 0,2 µm bis 0,4 µm aufweist.

5. Ein magnetisches Aufzeichnungsmedium nach Anspruch 1, in welchem die genannten kugelförmigen Teilchen (5) einen Durchmesser im Bereich von 0,15 µm bis 0,2 µm aufweisen.

6. Ein magnetisches Aufzeichnungsmedium nach Anspruch 1, in welchem die genannten kugelförmigen Teilchen (5) einer Oberflächenbehandlung mit einem Gleitfähigkeit verleihenden Mittel unterzogen werden.

7. Ein magnetisches Aufzeichnungsmedium nach Anspruch 6, in welchem das genannte Mittel mindestens eine Verbindung ist, ausgewählt aus der Gruppe, bestehend aus:
p-[N-(2-Aminoethyl)aminoethyl] phenethyl-trimethoxysilan; N-(2-Aminoethyl)-3-aminopropylmethyldimethoxysilan; N-(2-Aminoethyl)-3-aminopropyltrimethoxysilan; 1-(3-Aminopropyl)-1,1,3,3,3-pentamethyldisiloxan; 3-Aminopropyltriethoxysilan; 3-Aminopropyltris(trimethylsiloxy)silan; γ-(2-Aminoethyl)aminopropyltrimethoxyailan; γ-(2-Aminoethyl)aminopropylmethyldimethoxysilan; γ-Glycidoxypropyltrimethoxysilan; γ-Mercaptopropyltrimethoxysilan;
Isopropyltriisostearoyltitanat; Isopropyl-tris(dioctylpyrophosphat)titanat; Isopropyltri (N-aminoethylaminoethyl)titanat; Tetraoctylbis(ditridecylphosphat)titanat; Bis(dioctylpyrophosphat)oxyacettitanat;
Bis(dioctylpyrophosphat)ethylentitanat; Isopropyltrioctanoyltitanat; Isopropyltridecylbenzolsulfonyltitanat; Isopropyltri(dioctylphosphat)titanat; Tetrapropyl-bis(dioctylphosphat)titanat;
einer Laurinsäure, einer Myristinsäure, einer Palmitinsäure, einer Stearinsäure, einer Oleinsäure und einer Behensäure, wobei die genannten Säuren mindestens 12 Kohlenstoffatome aufweisen.

8. Ein magnetisches Aufzeichnungsmedium nach Anspruch 3, in welchem die genannten kugelförmigen Teilchen (5) einer Oberflächenbehandlung mit Isopropyltriisostearoyltitanat unterzogen werden.

9. Ein magnetisches Aufzeichnungsmedium nach Anspruch 3, in welchem die genannten kugelförmigen Teilchen (5) einer Oberflächenbehandlung mit einer Fettsäure mit mindestens 12 Kohlenstoffatomen und 3-Aminopropyltriethoxysilan unterzogen

10. Ein magnetisches Aufzeichnungsmedium nach Anspruch 4, in welchem die genannten kugelförmigen Teilchen (5) einer Oberflächenbehandlung mit Isopropyltriisostearoyltitanat unterzogen werden.

11. Ein magnetisches Aufzeichnungsmedium nach Anspruch 4, in welchem die genannten kugelförmigen Teilchen (5) einer Oberflächenbehandlung mit einer Fettsäure mit mindestens 12 Kohlenstoffatomen und 3-Aminopropyltriethoxysilan unterzogen werden.

## Revendications

1. Support d'enregistrement magnétique comprenant :
- un substrat non-magnétique (1); et
- un film magnétique (6) qui contient une ou plusieurs couches et qui est présent sur une face dudit substrat non-magnétique (1),
qui est caractérisé en ce que :
ledit film magnétique (6) a au moins une couche de surface magnétique (3) qui contient une poudre magnétique, des particules d'alumine et des particules sphériques (5), lesdites particules sphériques (5) formant des protubérances en forme de boutons en raison des différences entre le diamètre des particules sphériques (5) et l'épaisseur de la couche de surface magnétique (3), les particules sphériques (5) présentant des diamètres compris entre 0,5 et 1,5 fois l'épaisseur de ladite couche de surface magnétique (3) et étant présentes dans la couche de surface magnétique (3) en une quantité comprise entre 0,1 partie et 1 partie pour 100 parties en poids de la poudre magnétique, lesdites particules sphériques (5) étant choisies parmi des particules de dioxyde de silicium et des particules de noir thermique, à l'exclusion des particules d'alumine.

2. Support d'enregistrement magnétique selon la revendication 1, dans lequel;
- ledit film magnétique (6) présente en outre une couche magnétique sous-jacente (2).

3. Support d'enregistrement magnétique selon la revendication 1, dans lequel;
- ladite couche de surface (3) présente une épaisseur comprise entre 0,4 µm et 0,6 µm lorsque l'on utilise une longueur d'onde à l'intérieur d'un domaine de longueurs d'ondes classiques prédéterminé.

4. Support d'enregistrement magnétique selon la revendication 1, dans lequel;
- ladite couche de surface (3) présente une épaisseur comprise entre 0,2 µm et 0,4 µm lorsque l'on utilise une longueur d'onde à l'intérieur d'un domaine de longueurs d'ondes courtes prédéterminé.

5. Support d'enregistrement magnétique selon la revendication 4, dans lequel;
- lesdites particules sphériques (5) présentent un diamètre compris entre 0,15 µm et 0,2 µm.

6. Support d'enregistrement magnétique selon la revendication 1, dans lequel;
- lesdites particules sphériques (5) subissent un traitement de surface avec un agent pour être lubrifiées.

7. Support d'enregistrement magnétique selon la revendication 6, dans lequel;
- ledit agent est au moins un élément choisi dans le groupe constitué par :
- le p- [N- (2-aminoéthyl)aminoéthyl]phénéthyltriméthoxysilane; le N-(2-aminoéthyl)-3-aminopropylméthyldiméthoxysilane; le N-(2-aminoéthyl)-3-aminopropyltriméthoxysilane; le l-(3-aminopropyl)-1,1,3,3,3-pentaméthyldisiloxane; le 3-aminopropyltriéthoxysilane; le 3-aminopropyltris(triméthylsiloxy)silane; le γ-(2-aminoéthyl)aminopropyltriméthoxysilane; le γ-(2-aminoéthyl)aminopropylméthyldiméthoxysilane; le γ-glycidoxypropyltriméthoxysilane; le γ-mercaptopropyltriméthoxysilane;
- le titanate d'isopropyle et de triisostéaroyle; le titanate d'isopropyle et de tris(pyrophosphate de dioctyle); le titanate d'isopropyle et de tri(N-aminoéthyl-aminoéthyle); le titanate de tétraoctylbis(diphosphate de tridécyle); l'oxyacéto-titanate de bis(pyrophosphate de dioctyle); le titanate de bis(pyrophosphate de dioctyl)éthylène; le titanate d'isopropyle et de trioctanoyle; le titanate d'isopropyle et de tridécylbenzènesulfonyle; le titanate d'isopropyle et de tri(phosphate de dioctyle); le titanate de tétrapropylbis(phosphate de dioctyle);
- l'acide laurique, l'acide myristique, l'acide palmitique, l'acide stéarique, l'acide oléique et l'acide béhénique, sachant que lesdits acides contiennent au moins 12 atomes de carbone.

8. Support d'enregistrement magnétique selon la revendication 3, dans lequel;
- lesdites particules sphériques (5) subissent un traitement de surface avec le titanate d'isopropyle et de triisostéaroyle.

9. Support d'enregistrement magnétique selon la revendication 3, dans lequel;
- lesdites particules sphériques (5) subissent un traitement de surface avec un acide gras comportant au moins 12 atomes de carbone et le 3-aminopropyltriéthoxysilane.

10. Support d'enregistrement magnétique selon la revendication 4, dans lequel;
- lesdites particules sphériques (5) subissent un traitement de surface avec le titanate d'isopropyle et de triisostéaroyle.

11. Support d'enregistrement magnétique selon la revendication 4, dans lequel;
- lesdites particules sphériques (5) subissent un traitement de surface avec un acide gras comportant au moins 12 atomes de carbone et le 3-aminopropyltriéthoxysilane.
